# EUROPÄISCHE PATENTANMELDUNG

(11) **EP 2 677 206 A1**
(43) Veröffentlichungstag der Anmeldung: **25.12.2013**
(21) Anmeldenummer: 13002855.8
(22) Anmeldetag: 03.06.2013
(51) Int. Cl.: F16H 57/03, F03D 11/02

(54) **Gehäuse für ein Getriebe**

(30) Priorität: 20.06.2012 DE 102012012140
(71) Anmelder: ROBERT BOSCH GMBH, 70442 Stuttgart (DE)
(72) Erfinder: Lehmann, Marco, 42275 Wuppertal (DE); Kleine-Brockhoff, Ralf, 46284 Dorsten (DE); Schweihoff, Claudia, 44795 Bochum (DE)
(74) Vertreter: Wiesmann, Stephan

(57) **Zusammenfassung**

Gehäuse für ein Getriebe, insbesondere Planetengetriebe 4,aufweisend zumindest ein eine gehäuseversteifende Struktur aufweisendes Getriebegehäuseteil, weiterhin aufweisend zumindest eine Welle und Getriebezahnräder, wobei die Welle in dem Gehäuse gelagert ist. Erfindungsgemäß wird ein Gehäuse für ein Getriebe bereitgestellt, das hinsichtlich seines Gewichts und seiner Festigkeit optimiert ist. Erreicht wird dies dadurch, dass die gehäuseversteifende Struktur eine in Umfangsrichtung eines Getriebegehäuseteils ausgerichtete Wellenstruktur 12 und eine in radialer Richtung eines Getriebegehäuseteils ausgerichtete Sickenstruktur 13 ist.

## Beschreibung

Die Erfindung betrifft ein Gehäuse für ein Getriebe, insbesondere Planetengetriebe, aufweisend zumindest ein eine gehäuseversteifende Struktur aufweisendes Getriebegehäuseteil, weiterhin aufweisend eine Welle und Getriebezahnräder, wobei die Welle in dem Gehäuse gelagert ist.

Ein derartiges Gehäuse für ein Getriebe ist aus der DE 101 34 245 A1 bekannt. Das Getriebe weist eine innere Leistungsaufteilung, bestehend aus einem mit einem Eingangswelle und einer Ausgangswelle verbundenen und mit einer Außenverzahnung versehenden Großzahnrad, das von acht Ritzelwellen umgeben ist, deren Zahnritzel mit dem Großzahnrad kämmen, auf. Diese ganzen Bauteile sind in zumindest zwei Getriebegehäuseteilen, von denen zumindest ein Teil ein Gehäusedeckel ist, angeordnet und gelagert. Dabei ist der Gehäusedeckel zusätzlich als Drehmomentstütze ausgebildet, wobei das gesamte Gehäuse über diese Drehmomentstütze an einem das Getriebe umgebenden Bauteil aufgestützt ist. Der Gehäusedeckel ist zur leichteren Montierbarkeit in mehrere Bauteile aufgeteilt, die miteinander verschraubt sind. An den entsprechenden Fügestellen und auch in weiteren Bereichen weist der Gehäusedeckel Rippen auf, die zur Versteifung des Gehäusedeckels dienen.

Der Erfindung liegt die Aufgabe zu Grunde, ein Gehäuse für ein Getriebe bereitzustellen, das hinsichtlich seines Gewichts und seiner Festigkeit optimiert ist.

Diese Aufgabe wird dadurch gelöst, dass die gehäuseversteifende Struktur eine in Umfangsrichtung eines Getriebegehäuseteils ausgerichteten Wellenstruktur und/oder eine in radialer Richtung eines Getriebegehäuseteils ausgerichtete Sickenstruktur ist. Jede der beiden Strukturen, nämlich die Wellenstruktur und die Sickenstruktur ermöglicht für sich oder in Kombination mit der jeweiligen anderen Struktur eine festigkeitsoptimierte und auch gewichtsoptimierte Ausgestaltung des Getriebegehäuseteils. Die Wellenstruktur optimiert die entsprechende ehemals flache und verwindungsanfällige Gehäusewand des Getriebegehäuseteils zu einem verwindungssteifen Bauteil, ohne dass eine gewichtsintensive Materialzugabe erfolgt, die beispielsweise bei der Anbringung von Stegen oder Rippen auftritt. Dabei kann die Wellenstruktur fließende Übergänge, gebogene Übergänge oder aber auch abgekantete Übergänge aufweisen. Dabei schließt der Begriff der Wellenstruktur beispielsweise eine Rechteckstruktur, eine Trapezstruktur und eine Zackenstruktur ein, die jeweils abgerundete oder verrundete Geraden aufweisen können. Alternativ oder bevorzugt additiv zu der Wellenstruktur ist auch die Sickenstruktur ohne eine nennenswerte Materialzugabe geeignet die Steifigkeit und Festigkeit des Getriebegehäuseteils zu erhöhen. Die Sickenstruktur unterteilt die Gehäusewand des Getriebegehäuseteils in zwei Teilabschnitte, die zueinander abgewickelt sind. Zusammen mit der Wellenstruktur bietet die Sickenstruktur den Vorteil, dass ohne weitere Maßnahmen die Anzahl der einzelnen Elemente, in die die Gehäusewand aufgeteilt ist, verdoppelt wird. Die Wellenstruktur und die Sickenstruktur können zusammenwirkend auch als Wabenstruktur ausgebildet sein. Bei dieser besonders vorteilhaften Kombination der Wellenstruktur und der Sickenstruktur ist bei einer quasi gewichtsneutralen Ausgestaltung des Getriebegehäuseteils eine deutliche Erhöhung der Festigkeit des Getriebegehäuseteils erreicht.

In Weiterbildung der Erfindung ist die Wellenstruktur asymmetrisch ausgebildet. Dabei kann wiederum in weiterer Ausgestaltung der Erfindung die Wellenstruktur eine in der Umfangsrichtung sich ändernde und an einen Kraftfluss in dem Getriebegehäuseteil und an die Beanspruchung des Getriebegehäuseteils angepasste Verteilung und Dicke aufweisen. Für die entsprechende Auslegung der Wellenstruktur kann ermittelt werden, wo hoch belastete und weniger belastete Bereiche des Getriebegehäuseteils vorhanden sind, die dann mit einer asymmetrischen Wellenstruktur, einer angepassten Verteilung und einer angepassten Dicke ausgebildet werden. Dabei kann insbesondere die Dicke in wenig belasteten Stellen deutlich reduziert werden, wobei durch diese Maßnahmen das Gewicht des Getriebegehäuseteils gegenüber einem entsprechenden Getriebegehäuseteil, das durch Rippen verstärkt ist, beträchtlich verringert ist. Auch gegenüber einem Getriebegehäuseteil mit einer flachen und somit verwindungsintensiven Gehäusewand kann eine Gewichtsreduzierung erzielt werden.

In weiterer Ausgestaltung der Erfindung durchdringt die Sickenstruktur die Wellenstruktur zumindest abschnittsweise. Dabei ist es beispielsweise so, dass in einem gering belasteten Bereich der Wandung des Getriebegehäuseteils nur eine Sickenstruktur oder Wellenstruktur vorhanden ist und in höher und hochbelasteten Bereichen sowohl eine Sickenstruktur und eine Wellenstruktur vorhanden sind, die einander durchdringen.

In Weiterbildung der Erfindung ist die Sickenstruktur ebenfalls asymmetrisch ausgebildet. Dies bedeutet, dass die Sickenstruktur nicht kreisförmig ausgebildet ist. In weiterer Ausgestaltung der Erfindung ist die Sickenstruktur zumindest auf einem Teilumfang des Getriebegehäuseteils als Mehrfachsickenstruktur ausgebildet. Eine solche Mehrfachsickenstruktur ist insbesondere in hochbelasteten Bereichen des Getriebegehäuseteils angeordnet. Dabei kann die einfache Sickenstruktur nahtlos in eine mehrfach Sickenstruktur überführt werden.

In vorteilhafter Weiterbildung der Erfindung ist die Wellenstruktur beidseits der Sickenstruktur, die die Wellenstruktur aufteilt, unterschiedlich ausgebildet. Durch diese Ausgestaltung kann wiederum auf besondere Steifigkeitsanforderungen eingegangen werden.

In Weiterbildung der Erfindung ist eine Schaulochöffnung in dem Getriebegehäuseteil von einem Teilabschnitt der Siekenstruktur und/oder der Wellenstruktur und/oder einer Rippe eingefasst. Auch diese Ausgestaltung ermöglicht eine verstärkte Schaulochstruktur bei einem minimalen Materialaufwand für zusätzliche Versteifungen. Es können entsprechend den jeweiligen Erfordernissen eine oder mehrere Schaulochöffnungen an dem Gehäuseteil vorgesehen sein, und/oder diese insbesondere an einer gering belasteten Stelle des GetriebeGetriebegehäuseteils angeordnet sein.

In Weiterbildung der Erfindung ist das Getriebegehäuseteil ein Gehäusedeckel. Insbesondere an einem solchen flach ausgebildeten Getriebegehäuseteil ist der Erfindungsgegenstand besonders vorteilhaft umsetzbar. Der Erfindungsgegenstand kann aber auch an allen anderen Getriebegehäuseteilen angewendet werden.

In weiterer Ausgestaltung der Erfindung weist das GetriebeGetriebegehäuseteil zumindest eine Drehmomentstütze auf. Dabei ist das GetriebeGetriebegehäuseteil dann bevorzugt der Gehäusedeckel. Hierbei kann dann die Anbindung der Drehmomentstütze an den Gehäusedeckel besonders vorteilhaft optimiert werden, indem beispielsweise in dem Bereich der Anbindung die Wellenstruktur feingliedriger und mit dickeren Wandstärken, als in anderen Bereichen ausgebildet ist und gegebenenfalls zusätzlich die Sickenstruktur in dem Bereich der Anbindung der Drehmomentstütze als mehrfach Sickenstruktur ausgebildet ist.

In Weiterbildung der Erfindung ist das Gehäuse Teil eines Strömungskraftanlagengetriebes, insbesondere eines Meeresströmungskraftanlagengetriebes oder eines Windkraftanlagengetriebes. Bei solchen Strömungskraftanlagengetrieben sind hohe Leistungen zu übertragen und gleichzeitig müssen hohe Standzeiten der entsprechenden Getriebe gewährleistet werden. Diese Erfordernisse werden durch die festigkeitsoptimierte Auslegung der Getriebegehäuseteile erfüllt, während gleichzeitig eine Gewichtsreduzierung des so ausgebildeten Getriebes darstellbar ist.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Figur 1: eine schematische Seitenansicht einer Windkraftanlage mit einem erfindungsgemäß ausgestalteten Getriebegehäuseteil,
- Figur 2: eine Draufsicht auf ein erfindungsgemäß ausgebildetes Getriebegehäuseteil in Form eines Gehäusedeckels mit angeformten Drehmomentstützen,
- Figur 3: zeigt einen Schnitt A-A durch den Gehäusedeckel gemäß Figur 1,
- Figur 4: eine perspektivische Ansicht eines Gehäusedeckels mit angeformten Drehmomentstützen und mit einer Mehrfachsickenstruktur,
- Figur 5: eine perspektivische Ansicht eines Gehäusedeckels ähnlich zu der Figur 3,
- Figur 6: einen nur als Lagerdeckel ausgebildeten Gehäusedeckel,
- Figur 7: einen mit zwei auskragenden Ohren versehenen Gehäusedeckel und
- Figur 8: einen mit einem Ringflansch versehenen Gehäusedeckel.

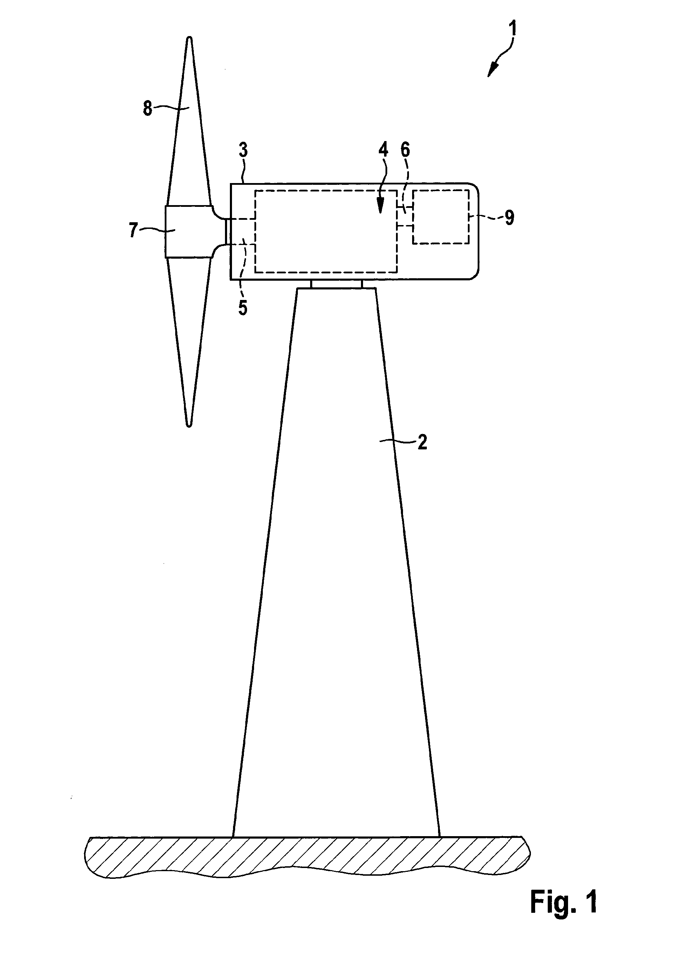

Figur 1 zeigt eine Seitenansicht einer Windkraftanlage 1 mit ihren wesentlichen Baugruppen. Die Windkraftanlage 1 weist einen Turm 2 auf, auf dem eine um eine Vertikalachse drehbar gelagerte Gondel 3 in Form eines Maschinengehäuses angeordnet ist. In der Gondel 3 ist das mehrere Getriebegehäuseteile aufweisende Planetengetriebe 4 drehfest befestigt, wobei das Planetengetriebe 4 Wellen in Form einer Antriebswelle 5 und einer Abtriebswelle 6 aufweist. Die Antriebswelle 5 des Planetengetriebes 4 ist mit einer Nabe 7 eines mehrere Rotorblätter 8 aufweisenden Rotors verbunden. Die Abtriebswelle 6 ist mit einer anzutreibenden Antriebsvorrichtung in Form eines Generators 9 drehverbunden. Das Planetengetriebe 4 ist so ausgelegt, dass es eine langsame Drehbewegung der Antriebswelle 5 in eine schnelle Drehbewegung der als Hochgeschwindigkeitsabtriebswelle ausgebildeten Abtriebswelle 6 umsetzt. Dazu weist das Planetengetriebe 4 eine oder mehrere Planetenstufen auf, die über ein abschließendes Stirnradgetriebe mit der Abtriebswelle 6 zusammenwirken. Mittels der Windkraftanlage 1 wird elektrische Energie erzeugt, in dem der von dem Wind in Drehbewegung versetzte Rotor die Drehbewegung auf die Antriebswelle 5 in das Planetengetriebe 4 einleitet. Das Planetengetriebe 4 setzt die Drehbewegung in eine schnellere Drehbewegung um und schließlich wird über die Abtriebswelle 6 die schnelle Drehbewegung zur Erzeugung von Strom auf den Generator 9 übertragen.

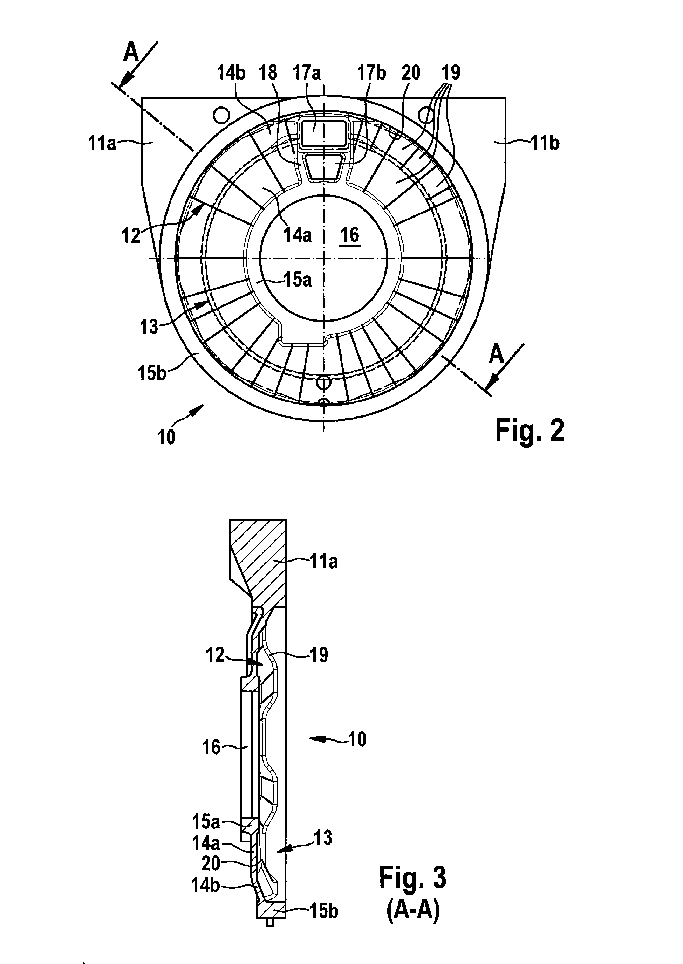

Figur 2 zeigt ein als Gehäusedeckel 10 mit zwei angeformten Drehmomentstützen 11a, 11 b ausgebildetes Getriebegehäuseteil des Planetengetriebes 4. Mittels der Drehmomentstützen 11a, 11 b wird das Planetengetriebe 4 in der Gondel 3 drehfest fixiert. Der Gehäusedeckel 10 weist eine gehäuseversteifende Struktur auf, die als eine in Umfangsrichtung des Gehäusedeckels 10 ausgerichtete Wellenstruktur 12 und eine in radialer Richtung beziehungsweise Umfangsrichtung des Gehäusedeckels 10 ausgerichtete Sickenstruktur 13 ausgebildet ist. Die Sickenstruktur 13 ist in diesem Ausführungsbeispiel angenähert kreisförmig ausgebildet und unterteilt die Wellenstruktur in einen inneren Bereich 14a und einen äußeren Bereich 14b. Der innere Bereich 14a der Wellenstruktur 12 grenzt an einen inneren Flansch 15a des Gehäusedeckels 10 an, der eine Gehäuseöffnung 16 einschließt, durch die die Antriebswelle 5 oder die Abtriebswelle 6 aus dem Planetengetriebe 4 herausgeführt ist.

Der äußere Bereich 14b der Wellenstruktur 12 ist von einem äußeren Flansch 15b begrenzt, der die äußere Begrenzung des Gehäusedeckels 10 darstellt und der in die Drehmomentstützen 11a, 11 b übergeht.

In dem Gehäusedeckel 10 sind zwei übereinander liegende Schaulöcher 17a, 17b eingelassen, die sich zwischen dem inneren Flansch 15a und dem äußeren Flansch 15b entlang einer Wellenstruktur 12 erstrecken. Die Schaulöcher 17a, 17b sind in den Bereichen zwischen dem inneren Flansch 15a und dem äußeren Flansch 15b von Rippen 18 eingefasst, die zumindest teilweise von der Wellenstruktur 12 und der Sickenstruktur 13 gebildet werden. Das zuvor beschriebene Schauloch 17b kann aber auch als verrippte Wellenstruktur 12 ausgebildet sein. Hierbei ist es so, dass ganz allgemein einzelne Wellenstrukturen 12 mit Rippen verstärkt sein können.

Im Bereich der Drehmomentstütze 11 b ist der äußere Bereich 14b der Wellenstruktur so ausgebildet, dass in dem äußeren Bereich 14b der Wellenstruktur 12 zwei oder mehr Wellen 19 mit einer Welle 19 des inneren Bereichs 14a der Wellenstruktur 12 getrennt durch die Sieke 20 der Sickenstruktur 13 zusammenwirkt.

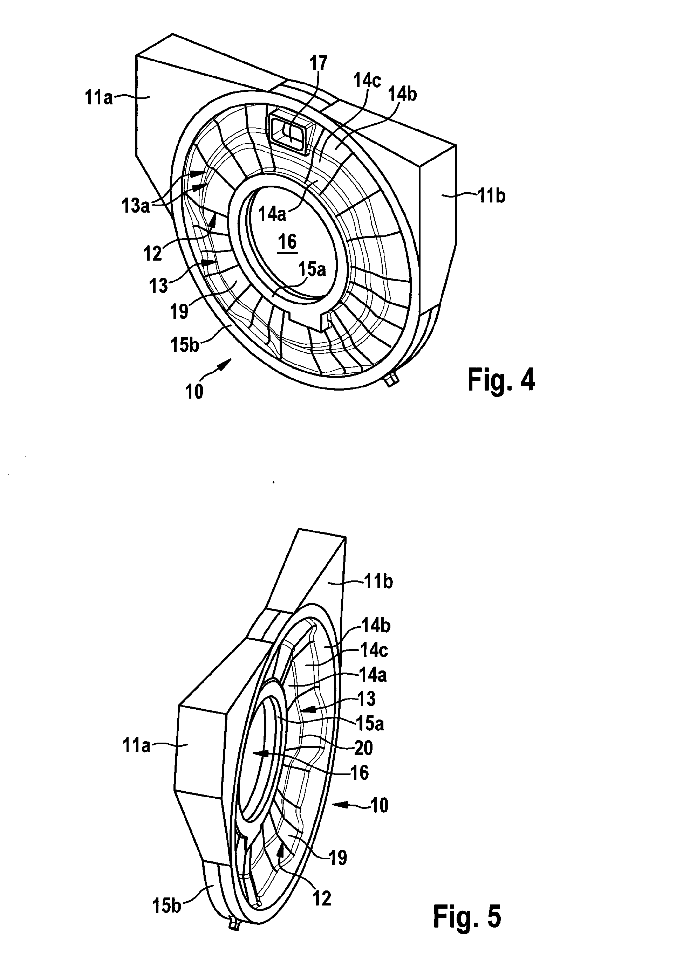

Figur 3 zeigt einen Schnitt A-A gemäß Figur 1 durch den Gehäusedeckel 10. Aus dieser Schnittdarstellung geht - ebenso wie aus den perspektivischen Darstellungen der Figuren 4 und 5 - der unterschiedliche Verlauf der Wellenstruktur 12 mit den Wellen 19 deutlich hervor, wobei die Wellenstruktur 12 durch die Sieke 20 der Sickenstruktur 13 in den inneren Bereich 14a und den äußeren Bereich 14b unterteilt ist. Weiterhin ist die Ausgestaltung der Drehmomentstütze 11a, des äußeren Flansch 15b und des die Gehäuseöffnung 16 umfassenden inneren Flansches 15a deutlich erkennbar. Schließlich ist in diesem Schnitt die unterschiedliche Wanddicke des Gehäusedeckels 10 beispielsweise zwischen dem inneren Bereich 14a und dem äußeren Bereich 14b sowohl in Radialrichtung als auch in Umfangsrichtung ersichtlich.

Figur 4 zeigt eine perspektivische Ansicht eines Gehäusedeckels 10, der ähnlich wie der in Figur 1 dargestellte Gehäusedeckel 10 ausgebildet ist. Unterschiedlich ist, wie auf der linken Seite dargestellt ist, dass die (einfache) Sickenstruktur 13 in eine Mehrfachsickenstruktur 13a übergeht, die auf der rechten Seite der Figur 3 durchgehend bis in den unteren Bereich des Gehäusedeckels 10 ausgebildet ist. Entsprechend unterteilt die Mehrfachsickenstruktur 13a die Wellenstruktur 12 in insgesamt drei Bereiche 14a, 14b, 14c, die alle unterschiedliche Wellenformen haben können. Weiterhin weist dieser Gehäusedeckel 10 nur ein Schauloch 17 auf.

Figur 5 zeigt eine andere perspektivische Ansicht eines Gehäusedeckels 10 aus dem der asymmetrische Verlauf der Wellenstruktur 12 und der Mehrfachsickenstruktur 13a ebenfalls deutlich hervorgeht.

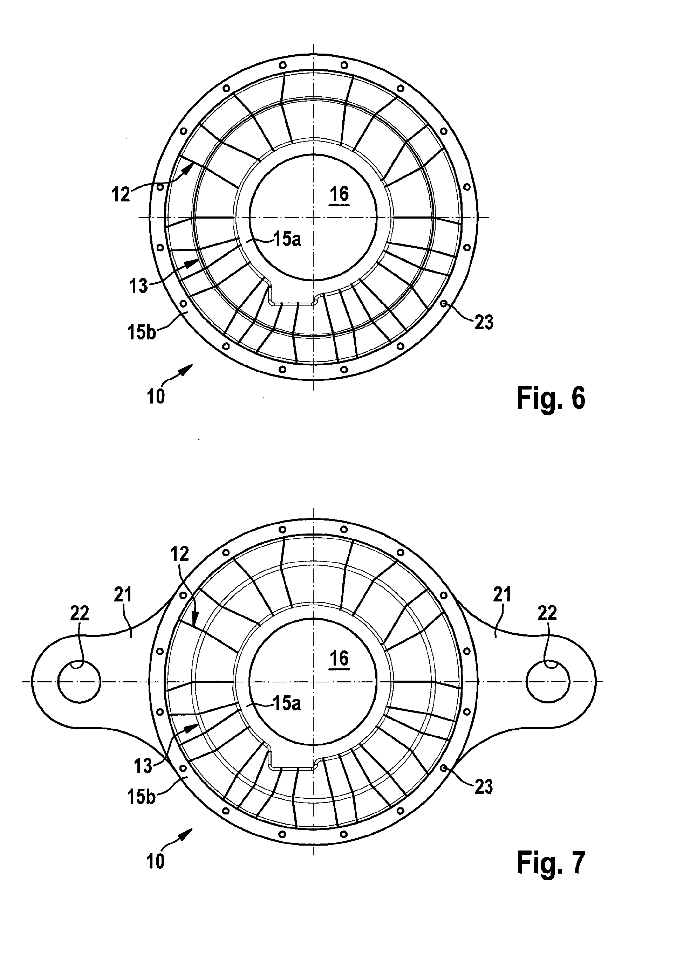

Figur 6 zeigt einen Gehäusedeckel 10 der als reiner Lagerdeckel ausgebildet ist und dementsprechend keine angeformten Drehmomentstützen 11a, 11 b und somit einen durchgehenden äußeren Flach 15b aufweist. In den äußeren Flansch 15b sind Bohrungen 23 zum Einsetzen von Befestigungsschrauben eingearbeitet. Ansonsten ist dieser Gehäusedeckel 10 wie zuvor beschrieben ausgebildet.

Der Gehäusedeckel 10 gemäß Figur 7 weist zwei seitliche Ohren 21 auf die zur Befestigung von Drehmomentstützen jeweils mit einer Öffnung 22 versehen sind. Ansonsten ist auch dieser Gehäusedeckel 10 wie zuvor beschrieben ausgebildet.

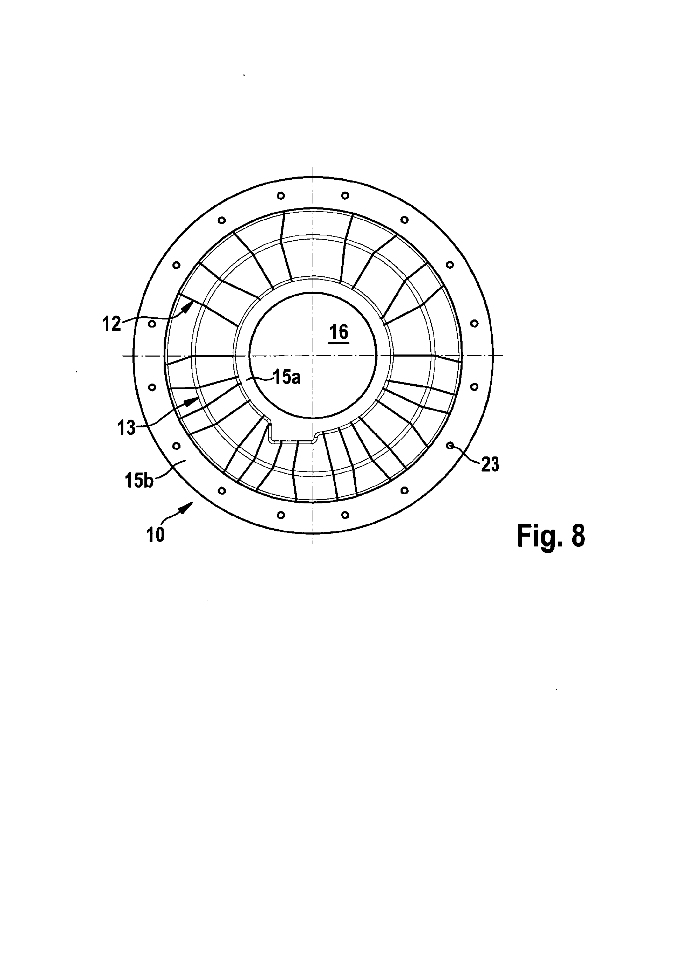

Bei dem in Figur 8 dargestellten Gehäusedeckel 10 ist der äußere Flansch 15b als Ringflansch mit einer Anzahl von Bohrungen 23 ausgebildet. Mittels in diese beispielsweise als Gewindebohrungen ausgebildeten Bohrungen 23 eingeschraubten Schrauben wird der Gehäusedeckel 10 und das gesamte Planetengetriebe 4 in der Gondel 3 drehfest festgelegt.

Abschließend wird darauf hingewiesen, dass beliebige Kombinationen insbesondere der in den Figuren beschriebenen Einzelmerkmale im Rahmen der Erfindung umsetzbar sind.

### Bezugszeichenliste

- 1: Windkraftanlage
- 2: Turm
- 3: Gondel
- 4: Planetengetriebe
- 5: Antriebswelle
- 6: Abtriebswelle
- 7: Nabe
- 8: Rotorblatt
- 9: Generator
- 10: Gehäusedeckel
- 11 a, 11 b: Drehmomentstütze
- 12: Wellenstruktur
- 13: Sickenstruktur
- 13a: Mehrfachsickenstruktur
- 14a: innerer Bereich
- 14b: äußerer Bereich
- 14c: mittlerer Bereich
- 15a: innerer Flansch
- 15b: äußerer Flansch
- 16: Gehäuseöffnung
- 17, 17a, 17b: Schauloch
- 18: Rippe
- 19: Welle
- 20: Sicke
- 21: Ohr
- 22: Öffnung
- 23: Bohrung

## Patentansprüche

1. Gehäuse für ein Getriebe, insbesondere Planetengetriebe (4), aufweisend zumindest ein eine gehäuseversteifende Struktur aufweisendes Getriebegehäuseteil, weiterhin aufweisend zumindest eine Welle und Getriebezahnräder, wobei die Welle in dem Gehäuse gelagert ist,
**dadurch gekennzeichnet, dass** die gehäuseversteifende Struktur eine in Umfangsrichtung eines Getriebegehäuseteils ausgerichtete Wellenstruktur (12) und/oder eine in radialer Richtung eines Getriebegehäuseteils ausgerichtete Sickenstruktur (13) ist.

2. Gehäuse nach Anspruch 1,
**dadurch gekennzeichnet, dass** die Wellenstruktur (12) asymmetrisch ausgebildet ist.

3. Gehäuse nach Anspruch 1 oder 2,
**dadurch gekennzeichnet, dass** die Wellenstruktur (12) in der Umfangsrichtung des Getriebegehäuseteils eine sich ändernde Verteilung und Dicke aufweist.

4. Gehäuse nach einem der vorherigen Ansprüche,
**dadurch gekennzeichnet, dass** die Sickenstruktur (13) die Wellenstruktur (12) durchdringt.

5. Gehäuse nach einem der vorherigen Ansprüche,
**dadurch gekennzeichnet, dass** die Sickenstruktur (13) asymmetrisch ausgebildet ist.

6. Gehäuse nach einem der vorherigen Ansprüche,
**dadurch gekennzeichnet, dass** die Sickenstruktur (13) zumindest auf einem Teilumfang des Getriebegehäuseteils als Mehrfachsickenstruktur (13a) ausgebildet ist.

7. Gehäuse nach einem der vorherigen Ansprüche,
**dadurch gekennzeichnet, dass** die Wellenstruktur (12) beidseits der Sickenstruktur (13) unterschiedlich ausgebildet ist.

8. Gehäuse nach einem der vorherigen Ansprüche,
**dadurch gekennzeichnet, dass** eine Schaulochöffnung (17, 17a, 17b) in dem Getriebegehäuseteil von einem Teilabschnitt der Sickenstruktur (13) und/oder der Wellenstruktur (12) und/oder einer Rippe (18) eingefasst ist.

9. Gehäuse nach einem der vorherigen Ansprüche,
**dadurch gekennzeichnet, dass** das Getriebegehäuseteil ein Gehäusedeckel (10) ist.

10. Gehäuse nach einem der vorherigen Ansprüche,
**dadurch gekennzeichnet, dass** das Getriebegehäuseteil zumindest eine Drehmomentstütze (11 a, 11 b) aufweist.

11. Gehäuse nach einem der vorherigen Ansprüche,
**dadurch gekennzeichnet, dass** das Gehäuse Teil eines Strömungskraftanlagengetriebes, insbesondere eines Meeresströmungskraftanlagengetriebes oder eines Windkraftanlagengetriebes ist.

12. Windkraftanlage 1 nach einem der vorherigen Ansprüche.
